Europäisches Patentamt

European Patent Office

Office européen des brevets

(11) Publication number: **0 115 108**
**B1**

(12) **EUROPEAN PATENT SPECIFICATION**

(45) Date of publication of patent specification: 07.01.87

(51) Int. Cl.⁴: **A 21 D 6/00, A 21 D 2/26**

(21) Application number: 83300406.2

(22) Date of filing: 26.01.83

(54) Frozen dough having improved frozen storage shelf life.

(43) Date of publication of application:
08.08.84 Bulletin 84/32

(45) Publication of the grant of the patent:
07.01.87 Bulletin 87/02

(84) Designated Contracting States:
AT BE CH DE FR GB IT LI LU NL SE

(56) References cited:
GB-A-1 346 581
GB-A-1 538 360

THE BAKERS DIGEST, vol. 45. no. 2, April 1971,
pages 56,57, Editor E.J. Pyler, Chicago, USA,
G.L. LANNUIER: "Frozen bakery foods"

THE BAKERS DIGEST, vol. 38, no. 6, December
1964, pages 59-63, Editor E.J. Pyler, Chicago,
USA, K. LOREENZ et al.: "Frozen bread dough"

PROCEEDINGS OF THE ANNUAL MEETING OF
THE AMERICAN SOCIETY OF BAKERY
ENGINEERS, vol. 54, 1978, pages 90-95,
FUHRMANN: "Frozen dough products"
CEREAL FOODS WORLD, vol. 25, no. 10,
October 1980, pages 656-662, J. POMERANZ:
"What? How much? Where? What function

(73) Proprietor: GENERAL FOODS CORPORATION
250 North Street
White Plains, N.Y. 10625 (US)

(72) Inventor: Benjamin, Earl James
150 Beechmont Drive
New Rochelle New York 10804 (US)
Inventor: Ke, Charles Hsueh-Chien
44 Hamilton Lane
South Plainsboro New Jersey 08536 (US)
Inventor: Hynson, Richard Byron
8 Dogwood Lane
Skillman New Jersey 08558 (US)
Inventor: Hsu, Chi-Ming Lee
Cedar Lane Terrace
Ossining New York 10562 (US)

(74) Representative: Allard, Susan Joyce et al
BOULT, WADE & TENNANT 27 Furnival street
London EC4A 1PQ (GB)

(56) References cited:

PROCEEDINGS OF THE 56TH ANNUAL
MEETING OF THE AMERICAN SOCIETY OF
BAKERY ENGINEERS (ASBE), 1980, pages
38-43, BOYD: "Manufacture and processing of
frozen dough"

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

The present invention relates to frozen dough products and their preparation; and particularly, to improvements which provide products of this type characterized by prolonged frozen storage stabilities suitable for commercial distribution.

A wide variety of frozen dough products are known and have been available to the consumer in the form of bread items, namely white, wheat, raisin, and French- or Italian-type breads, a few basic dinner- or soft-roll-type items, puff dough items, and a variety of frozen cookies. Institutional frozen dough products available to in-store bake-off operations, retail bakers, cafeterias, and other feeding programs encompass a wider variety of frozen dough products, such as hard rolls, Kaiser rolls, hamburger rolls, frankfurter rolls, and other speciality rolls, rolled-in products such as Danish or puff pastry in either a pre-form or bulk or slab form, sweet yeast-raised dough items, such as cinnamon rolls, coffee cakes or other plain or filled sweet dough varieties, yeast-raised dough for fried products such as yeast-raised donuts or other fried items in various shapes or forms. The shelf life of frozen dough products will vary according to the formulation and the size of the item, some formulations have a little longer freezer life than others. Larger units will remain stable for longer periods than smaller units.

All products however are affected by freeze/thaw cycles of temperatures surrounding the product which can occur during transportation, distribution and handling at the final processing or bake-off level. It is desirable to keep the core temperature of frozen doughs in the range of −26.0°C to −29°C (−15° to −20°F) to retain product stablity. Unfortunately, frozen dough products available heretofore have a frozen storage shelf-life that is of insufficient duration even when the core temperature is kept at −29°C (−20°F) so as to render the dough unsuitable for numerous commercial applications. For normal distribution purposes, the frozen dough should withstand freeze/thaw cycles of temperatures around the product during marketing and distribution and the variety of home freezer storage temperatures used by consumers until prepared for consumption.

Various techniques for increasing the frozen storage shelf life of dough products are known. Heretofore, the objective of many researchers in the baking industry has been the retention of sufficient yeast viability and gassing power during frozen storage of yeast-containing doughs. The most commonly used technique for increasing frozen storage shelf-life of yeast-leavened frozen doughs has been to achieve yeast stability by preparing and freezing the dough with little or no fermentation before freezing.

James W. Pence in Chapter 7 of *Quality And Stability Of Frozen Foods,* edited by W. B. VanArsdel et al, Wiley-Interscience, New York (1969) at pages 188—189 teaches that the yeast cells in unfermented frozen doughs are more cold-resistant than those in fermented doughs; therefore, most doughs are frozen with little or no fermentation.

The American Institute of Baking, Bulletin No. 108 (1964), teaches that doughs are frozen immediately after molding with little or no fermentation.

Schremmer, in U.S. Patent No. 3,375,117, teaches that a frozen dough, chemically-leavened or yeast-leavened, of prolonged storability is produced when flour and dough-forming ingredients are cooled and mixed at a temperature below about 0°C.

Matz et al, in U.S. Patent No. 3,166,425, teaches that the stability of chemically-leavened refrigerated doughs can be improved by proofing at temperatures of about 15.5°C to 23.8°C (60° to 75°F), cooling the dough for a time sufficient to bring the dough to its freezing point, and, thereafter, storing the dough at refrigeration temperatures above 0°C (32°F).

Ono et al, in U.S. Patent No. 3,894,155, teaches the preparation of a frozen dough having improved storage stability wherein the fermentation activity of the yeast is suppressed by two-stage addition of yeast. The second-stage addition of yeast is done under cooled conditions (a temperature of 2° to 15°C), immediately followed by mixing the dough thus formed and freezing it without further fermentation.

P. E. Marstan in *Bakers Digest 52* (5): 18—20, 37 (October 1978) teaches that dough destined for freezing should be developed in a mixer, have minimum yeast activity and gas generation before freezing.

Changes in formulation have been recommended to increase frozen storage shelf life: an increase in yeast level to 4 or 5%, an increase in shortening to 5%, and a slight decrease in water absorption (K. Lorenz, *Bakers Digest 48* (2): 14—30 (1974); James Pence in *Quality And Stability Of Frozen Foods, supra).*

Dough conditioners and added vital wheat gluten at the 2% level have been incorporated into frozen doughs to improve dough strength. Taguchi et al, in U.S. Patent No. 3,901,975, discusses the use of alpha-amino acids, either alone or in combination with a bromic acid salt, to prevent the reduction in yeast activity during the freezing and thawing of the dough for the purpose of prolonging yeast viability and gassing power in frozen bread.

W. E. Boyd at *Proc. Ann. Meet Amer. Soc. Bakery Eng.* 56th (1980) at pp. 38—43 describes the use of unbleached spring wheat flour in a frozen dough for white bread having a protein level of approximately 13% and dough conditioners, namely, potassium bromate, sodium stearoyl-2-lactylate and ascorbic acid. Boyd also teaches that vital wheat gluten is added at the 2% level in order to improve the dough strength of rye, wheat and raisin breads.

D. F. Fuhrmann at *Proc. Ann. Meet Amer. Soc. Bakery Eng.* 54th (1978) suggested that flour with a higher protein level, 12.50 to 13.50 percent, gives better dough tolerance and better product stability for freezing and handling of dough which is not proofed before freezing at the bake-off or retail level.

It has also been suggested that frozen dough stability is improved if the freezing temperature is lower than the storage temperature of the dough.

K. H. Hsu et al. in *Cereal Chemistry, 56* (5) 424—426 (1979) teach that in general, frozen doughs were less stable if their storage temperature was lower than their freezing temperature. Thawing or partial thawing followed by refreezing was also harmful to frozen dough stability.

J. L. Vetter in *Cereal Foods World 24* (2) 42—43 (Feb. 1979) stresses the need for additional research on freezing rates in dough systems in order to optimize processing and maximize shelf life. A shelf life of one year was expected if doughs were processed within 10—15 minutes after mixing by freezing at −32°C (−25°F) and storing below −12°C (+10°F).

The baking industry is still seeking to maximize frozen storage shelf life of frozen doughs. The variety of approaches offered for the purpose is, to some extent evidence that none is without disadvantage. Some of the techniques identified by the prior art may be effective in prolonging frozen storage shelf life, but product improvements are still needed. The frozen dough industry has spent much effort educating supermarket managers and consumers on correct storage temperatures and correct preparation procedures, has improved quality by dating of the products, has increased advertising and promotional programs, and has made improvements in merchandising techniques. The consumer, however, still finds it quite frustrating at times trying to prepare a fresh "home-baked" loaf of bread from frozen dough which does not rise in the pan after thawing, even though all of the instructions on the package have been carried out correctly. Thus, it is still desirable to find a means for prolonging the frozen storage shelf life of frozen doughs while maximizing consumer convenience, insuring greater uniformity in product quality, minimizing sensitivity to less than ideal freezer storage temperatures, with consistently good end results whether baked at home or by retail bakers.

The novel yeast leavened and proofed frozen dough composition of this invention includes wheat protein content in an amount greater than 16% protein based on the total weight of flour, in addition to the necessary dough ingredients such as flour and water. Other ingredients common in the art which are used in making dough may include sugar, salt, shortening, non-fat dry milk and emulsifiers. These ingredients when processed by the methods described herein, interact in an unexpected way, enabling the frozen dough to withstand less than ideal commercial distribution temperatures and storage in home freezers for prolonged periods of time, e.g. more than 16 weeks, with good end product results. One of the objects of this invention is to improve the frozen storage stability of any dough composition so that when made according to the present method it is capable of sustaining prolonged periods of freezing and is able to produce a good quality baked product after frozen storage.

The frozen doughs of the present invention will maintain their quality at normal commercial frozen storage temperature ranges for at least 16 weeks, and can conveniently be converted from the frozen dough to a finished bake loaf having a good loaf volume and oven spring within about 1 hour. This frozen dough which is proofed before freezing eliminates the usual thawing and proofing step, which usually requires 2—12 hours for the thawing and 2—4 hours for the proofing, before the dough is placed in the oven for baking.

The dough composition prepared according to the present invention can comprise all of the usual dry ingredients, shortenings, as desired, in amounts traditionally employed in the baking industry. A radical departure from the usual dough ingredients involves the use of more than 16% wheat protein, preferably from 17—28% wheat protein, based on the total flour content.

It is noted that total protein in the dough compositions contemplated can include minor amounts of protein from such sources as egg albumen, nonfat dry milk, whey and soy, but for the purposes of calculating protein content for this invention, the calculations are limited to wheat protein in major amounts of more than 16% flour basis.

A suitable source for the wheat protein content can be a naturally occurring high protein wheat flour having from 17—24% protein as measured by standard American Association of Cereal Chemists (AACC) methods. For example, a wheat flour derived from a hard red winter wheat having the following specifications:

| Specification | Limit | Analytical Method |
|---|---|---|
| Moisture | 14% maximum | AACC |
| Foreign Material | None | AACC |
| Flavor | None | Organoleptic |
| Odor | None | Organoleptic |
| Protein (Flour) (N × 5.7 M.B.) | 18% minimum | AACC |
| ASH | 0.42—0.48 | AACC |
| Crude Fiber | — | AACC |
| Farinograph Water Absorption | 67 ± 1% | AACC |
| Stability | 17—24 min | AACC |
| Peak Time | 20—25 min | AACC |
| Mixing Tolerance Index | 10—20 BU | AACC |

may be employed.

Another source of wheat protein for the frozen dough of this invention could comprise a combination of a commercially available flour having 12—15% protein content and a supplemental amount of protein concentrates selected from the group consisting of air-fractionated wheat flour and vital wheat gluten and other glutinous sources to increase the total protein content on a flour basis, from 12—15% to a level greater than 16%. Additional protein has been found to have a cumulative effect, thus a 16% protein level yields an improved product over a 15% level, 17% is improved over 16% and so on. The exact protein level employed will be, in part, determined by economic considerations, since as will be recognized by those skilled in the art, increased protein levels will increase costs.

In addition to increased storage stability, another advantage that results from using wheat protein for this invention is that the wheat proteins have an advantageous effect on the organoleptic qualities of the baked product. Y. Pomeranz in *Cereal Foods World, 25* (10) 656—662 (1980) teaches that the higher protein levels in a non-frozen dough contribute to a higher loaf volume. However, no one suggests that higher protein levels in frozen dough would lead to significant increases in frozen storage shelf life.

As employed throughout this disclosure, the term "dough" is meant to include a mixture of flour and other ingredients stiff enough to knead or roll. "Fermentation" is meant to include all changes in the dough brought about by the action of yeast enzymes which function to aerate a dough and develop the gluten. Total fermentation time includes the time elapsed during fermentation of the dough in bulk, resting or benching, and proofing. For the sake of clarity, traditional baking terminology is defined below and employed when appropriate to identify the specific dough treatment steps and/or dough ingredients.

"Fermentation in bulk" occurs after the dough formulation is mixed and allowed to stand before it is divided into separate portions. "Resting" is used interchangeably with "benching" to denote periods of time allowed to give the gluten of the flour time to recover from any step such as dividing, moulding, forming, etc., wherein the dough has been stretched or worked. Without these rest periods, the dough is usually sticky and difficult to handle.

"Proofing" is the final step before baking or freezing wherein time is allowed for the yeast leavening agent to produce more gas to give the correct volume and vesiculation to the moulded or shaped dough portion. This proofing step also includes "panning", which is defined as placing shaped dough in pans.

The term "baked product" includes rolls, bread, biscuits, sweet doughs, pizza crust, plain or filled doughs, puff pastry, and the like.

On a flour basis, the moisture content of any of the doughs of this invention will range between 50 and 95% and, more typically, between 70 and 95%. If the dough contains moisture greater than the amount specified above, it will become difficult to handle. If the moisture content is too low, the dough becomes so stiff and nonextensible that the proper oven spring and rise do not occur.

For the avoidance of doubt all percentages herein are by weight based on the total weight of the flour unless otherwise stated.

The present is now particularly described with respect to the preparation of a yeast-leavened frozen dough which is proofed before freezing.

According to the preferred embodiment, the ingredients are mixed under ambient conditions which are usually lower than normal fermentation temperatures of about 30°C. Optimally, the fermentation temperature is in a range between 20°C and 30°C so as to obtain a slow and controlled rate of fermentation. If temperatures above 30°C are utilized, the dough structure is likely to expand too much and weaken. Those skilled in the art will readily appreciate that fermentation occurs as a function of time and temperature. In the present dough formulaton, total fermentation time, before freezing, is usually for from 1.0 to 3.0 hours. Fermentation of the yeast-containing dough of this invention occurs at separate intervals of time; first in bulk and subsequently with the dough in divided portions. The fermentation periods comprise one or more short intervals of at least five minutes duration with the dough in bulk or in divided portions and one longer interval of about 45 minutes duration; however, the total fermentation time does not exceed two hours. Fermentation times and temperatures are limited to control the volume of the dough as discussed in further detail *infra.* It is also important to have the proper dough rheological characteristics to obtain a high quality bread. Because the yeast, yeast by-products and flour enzymes are important factors in obtaining the proper rheology, fermentation time must be controlled. However, those skilled in the art will also appreciate that different types of strains of yeast will dictate different times and temperatures to be used in fermentation.

After fermentation in bulk has taken place, conventional steps are employed in forming the dough into bread loaf configurations. Those skilled in the art will recognize that these steps usually consist of dividing, rounding, benching, molding and panning of the bread dough.

At this point in the process, the formed yeast-containing dough is allowed to proof for a period of time to rise to a given height. The proofing period allows the dough to generate additional carbon dioxide so that when it goes into an open it will spring up. This proofing period is essential because the loss of carbon dioxide which occurs during dividing and formation must be regenerated. During this period, the gluten relaxes and the dough piece conforms to the shape of the container. The overall objective of the final proofing period is to allow each formed dough to attain a specific volume of between 1.33 to 3.08 cc/g dough, preferably 1.98 to 2.86 cc/g dough, before freezing.

The volume of the fermented dough, before freezing, has a direct correlation to the volume of the finished baked loaf which has been taken directly from the freezer and baked. The difference between the size of the frozen dough portion after frozen storage and the maximum size of the baked product attained in the oven is called "oven spring". Oven spring can be positive or negative. When the fermented dough prior to freezing has a specific volume of from 1.0 to 2.64 cc/g, a positive and increasing oven spring results. When the fermented dough is greater than 2.64 c cc/g, a positive but decreasing oven spring results. When the specific volume before freezing exceeds 3.08 cc/g, negative oven spring results, i.e., the bread does not rise in the oven. Thus, after forming each portion of fermented dough and proofing to allow additional fermentation before freezing, the proofing time should be sufficient for each portion of dough to attain a specific volume of from about 1.33 to about 3.08 cc/g to obtain a desirable baked product which rises in the oven.

If the fermentation period is very long in time, the dough probably expands too much and weakens the dough structure. Another problem with extended fermentation periods is that the surface of the dough will be subject to an evaporation or dessication phenomenon. Consequently, a thin surface layer would form on the dough body which has a lower water content than the body of dough underneath the surface layer. This surface layer forms a coherent skin covering the dough body which in turn produces textural and color abberations not desired in a final baked product. One method to retain the desired moisture content and prevent dessication of the dough is to package the dough immediately after the final proofing period. Another method is to package the dough immediately before the final proofing period and allow such period to occur while the dough is in the package. If one proceeded by the latter method, more energy would be required to freeze the dough within the package.

Any of the doughs of this invention should be frozen such that the core temperature of it reaches −1.0°C to −25.0°C, and more preferably, −6.0°C to −25.0°C within 1 to 6 hours and, more preferably, between 1½ and 4 hours. When frezing the dough, a uniform cooling rate throughout the dough is desirable. The frozen dough is typically stored at a temperature within the range of −30.0°C to −10.0°C.

During the baking process, the dough expands to give a normal loaf volume. The expansion can be 1½ times its original volume. This physical occurrence provides a sense of baking from "scratch" rather than just rewarming a previously baked product. This sense of accomplishment is further enhanced by the fresh-baked aroma of leavened bread which is given off.

The present invention is further illustrated by the following examples.

## Example 1
### YEAST-LEAVENED FROZEN DOUGH PROOFED BEFORE FREEZING, 24% Protein

| Ingredient | % Flour Basis |
|---|---|
| Enriched bread flour, 14% protein | 100.00 |
| Vital wheat gluten | 17.86 |
| Nonfat dry milk | 2.00 |
| Sugar | 6.00 |
| Sodium chloride | 2.00 |
| Activated dry yeast | .50 |
| Yeast food | .50 |
| Hydrocolloid gum | .07 |
| Liquid shortening Emulsifier; diacetyl tartaric acid, ester of monoglyceride (DATA) | .50 |
| α monoglycerides | .35 |
| Water | 81.86 |
| L-cysteine | 60 ppm |
| Potassium bromate | 70 ppm |
| Ascorbic acid | 160 ppm |

Mix together hydrocolloid gum (7 g) and quantity (50 g) of sugar to facilitate dispersion of gum in water. Slowly add gum and sugar mixture to tap water (1600 g) while mixing with an electric mixer. After thoroughly mixing the gum, sugar and water, the mixture is allowed to stand while preparing separate aqueous solutions of three dough conditioners; L-cysteine, potassium bromate and ascorbic acid in separate concentrations each having 5 grams of conditioner per liter of water. Next, in a separate container, the emulsifier (DATA) 50 g, is mixed with the liquid shortening (550 g) by stirring.

The remaining dry ingredients, except for the activated dry yeast, are placed in a container and mixed with an electric mixer at speed 1 for ten minutes.

To the mixed dry ingredients are added the emulsifier/shortening mixture; gum/sugar/water mixture; 60 ppm of L-cysteine solution; 160 ppm ascorbic acid solution and the remainder of the water not used in preparing the gum/sugar/water mixture and aqueous solutions of dough conditioners. The dry ingredients and all additional specified above are mixed with an electric mixer for less than one minute. Next, 70 ppm of the potassium bromate solution is added to the previously mixed ingredients; then the entire mixture is mixed with an electric mixer, at speed 1, for three minutes. The activated dry yeast is slowly added over a one-minute interval during this mixing step.

The yeast-containing mixture is then mixed at speed 2 for twenty five minutes to achieve optimum development of a bulk dough.

The dough is transferred to a trough and allowed to ferment for 15 minutes at 23°C. Thereafter, the dough is divided and rounded in to 454 ± 5 gram portions. After rounding, the dough is allowed to rest for 15 minutes in an intermediate proof step before moulding and panning. After panning, the dough is allowed to ferment for approximately 120 minutes at 80°F (26.6°C) and 85% relative humidity until each 454 ± 5 gram dough piece attains a volume of approximately 1100 cubic centimeters (cc). The dough is then frozen for two hours at −35°C packaged and moved to a −18°C freezer for storage.

The baking performance of this dough after extended storage times at −18°C is reported in Table II following Example 7 *infra*. All doughs described herein are taken from frozen storage, placed in a cold oven which is thermostatically controlled. The oven is immediately turned on and allowed to heat to a temperature of about 180°C. Each dough piece is baked for about 55 to 60 minutes. Other methods for preparing a finished baked loaf are contemplated. For example, baking in a preheated oven, microwave oven preparation, and the like can be used.

6

Examples 2—6
Yeast-leavened frozen dough, proofed before freezing
The ingredients for Examples 2—6 are as specified in Table I.

TABLE I

VARYING LEVELS OF PROTEIN

| Example No. | % Protein, Flour Basis | % Added Vital Wheat Gluten | % Water, Flour Basis |
|---|---|---|---|
| 2 | 14 | 0.00 | 64.00 |
| 3 | 18 | 6.45 | 67.23 |
| 4 | 20 | 10.00 | 69.00 |
| 5 | 22 | 13.79 | 70.90 |
| 6 | 24 | 17.86 | 72.93 |

In each of the above examples the remaining ingredients used are in the proportions stated below:

| Ingredient | % Flour Basis |
|---|---|
| Enriched bread flour, 14% protein | 100.00 |
| Liquid shortening | 6.00 |
| Emulsifier; diacetyl tartaric acid, ester of monoglyceride (DATA) | 0.50 |
| Activated dry yeast | 1.50 |
| Yeast food | 0.50 |
| Nonfat dry milk | 2.00 |
| Sugar | 6.00 |
| Sodium Chloride | 2.00 |
| Egg albumen | 0.50 |
| Hydrocolloid gum | 0.07 |
| Sodium Carrageenan | 0.10 |
| L-cysteine | 60 ppm |
| Potassium bromate | 70 ppm |
| Ascorbic acid | 120 ppm |

The ingredients and mixed, fermented, moulded, panned, proofed and then frozen in a procedure similar to that described in Example 1. Baking results after extended storage times at −18°C are reported in Table II below.

Example 7
Yeast-leavened frozen dough, proofed before freezing, naturally occurring high protein varietal flour
A dough is prepared according to the procedure described in Example 1, using the ingredients in the proportions specified, except that a naturally occurring varietal flour is substituted for the commercially available 14% protein bread flour and the vital wheat gluten. Thus, 100% of the flour in this Example is

7

obtained from a varietal wheat having a measured protein content of 20% based on the total weight of the flour. After mixing, fermenting, moulding, panning, proofing and freezing, the dough is stored at −18°C for the periods of time shown in Table II. Table II also shows baking results after removal of several dough portions from −18°C storage. In Table II the dash (—) indicates, "not measured".

TABLE II
Proofed Loaf Volume Before Freezing ~1100 CC
Storage at −18°C (0°F)

| Storage Period (Days): | | 1 | 20 | 40 | 60 | 112 |
|---|---|---|---|---|---|---|
| Dough Portions from Ex. No. | % Protein (Flour Basis) | Approximate Volume of Baked Bread (cc) | | | | |
| 1 | 24 | 2025 | 1975 | 1950 | 1910 | 1850 |
| 2 | 14 | 1900 | 1600 | 1300 | 1300 | 1250 |
| 3 | 18 | 2000 | 1650 | 1470 | 1380 | 1250 |
| 4 | 20 | 2000 | 1900 | 1850 | 1760 | 1500 |
| 5 | 22 | 2200 | 1900 | 1900 | 1900 | 1700 |
| 6 | 24 | 2300 | 2200 | 2000 | 2050 | — |
| 7 | 20 | 2010 | 2000 | 2000 | 1700 | — |

The surprising and unexpected results which are the essence of this invention are shown in the positive correlation between protein content and the prolonged frozen storage shelf-life of frozen dough which has been proofed before freezing. As protein content increases from 14 to 24% the ability to achieve an excellent loaf volume, after frozen storage and upon baking, is significantly improved. Instead of a 600 cc decrease in baked loaf volume after 60 days frozen storage of a loaf containing 14% protein, the decrease in baked loaf volume over the same period of time is 300 cc or less in a loaf containing 20—24% protein, flour basis. Experience shows that even after extended frozen storage for over 100 days, a baked loaf volume which is commercially acceptable and desirable is easily produced.

The above table also shows a positive correlation between protein content and loaf volume. The higher the protein content, the higher the initial loaf volume of bread baked after 1 day of frozen storage.

Example 8
Bran bread—25% flour protein; proofed before freezing
The following ingredients are mixed, fermented, moulded, panned, proofed and then frozen in a procedure similar to that described in Example 1. The baking performance of this dough after extended storages times at −18°C is reported in Table III following Example 10 *infra*.

| Ingredient | % Flour Basis |
|---|---|
| Enriched bread flour, 14% protein | 60.0 |
| Whole wheat flour | 40.0 |
| Vital wheat gluten | 20.0 |
| Bran | 10.0 |
| Dark brown sugar | 3.0 |
| Light molasses | 3.0 |
| White sugar | 4.0 |
| Sodium chloride | 2.0 |
| Activated dry yeast | 0.5 |
| Liquid shortening | 4.0 |
| Emulsifier, diacetyl tartaric acid, ester of monoglyceride (DATA) | .50 |
| α monoglycerides | 0.50 |
| Hydrocolloid gum | 0.07 |
| Water | 88.35 |
| L-cysteine | 60 ppm |
| Potassium bromate | 70 ppm |
| Ascorbic acid | 160 ppm |

### Example 9

Wheat bread, 25% flour protein; proofed before freezing

The ingredients and processing procedure in Example 8 are used to prepare a wheat bread with the addition of a pre-cooked wheat and different quantities of bran and water as indicated below:

| Ingredient | % Flour Basis |
|---|---|
| Bran, wheat | 2.50 |
| Water | 93.00 |
| Pre-cooked wheat, dry | 3.00 |

Baking results after storage at −18°C is reported in Table III following Example 10 *infra*.

### Example 10

French/Italian bread, 20% flour protein: Proofed before freezing

This lean formula dough consisting of the ingredients listed below is prepared using the procedure described in Example 1. The baking performance after storage at −18°C is reported in Table III below:

9

| Ingredient | % Flour Basis |
|---|---|
| Enriched bread flour, 14% protein | 100.00 |
| Vital wheat gluten | 10.00 |
| White sugar | 2.50 |
| Sodium chloride | 2.00 |
| Activated dry yeast | 0.50 |
| Liquid shortening | 2.00 |
| Emulsifier; diacetyl tartaric acid, ester of monoglyceride (DATA) | 0.50 |
| Hydrocolloid gum | 0.07 |
| Water | 73.00 |
| L-cysteine | 60 ppm |
| Potassium bromate | 70 ppm |
| Ascorbic acid | 160 ppm |

TABLE III
Storage at −18°C
Proofed Dough Volume Before Freezing ~1100 cc

| Storage Period (Days): Dough Portions from Ex. No. | 1 | 14 | 21 | 50 | 90 | 180 |
|---|---|---|---|---|---|---|
| | | Volume of Baked Bread (cc) | | | | |
| 8 (Bran) | 2125 | 2100 | 1825 | — | — | |
| 9 (Wheat) | 2025 | 2000 | 2000 | 1860 | 1850 | 1600 |
| 10 (French/Italian) | 2140 | 2075 | 2000 | 1715 | 1650 | 1600 |

Example 11

Frozen storage stability of yeast containing dough systems with and without gluten addition

The following yeast-containing dough systems were prepared, proofed, frozen and stored for up to four weeks, with bake-offs at the intervals shown in Table IV below.

Dough No. 1 contains 500 g wheat flour (14% protein, flour basis), 31.25 g cottonseed oil, 328 g water with 2.5 g activated dry yeast dissolved with 1 g sugar and 10 g water.

Dough No. 2 contains 80% wheat flour (14% protein, flour basis), 20% vital wheat gluten in addition to the other non-flour ingredients used in Dough No. 1 *supra*.

The following procedure is used in mixing and handling each dough sample. Cottonseed oil and water are added to the flour, in the amounts specified above. The dough ingredients are mixed in an electric blender for three minutes at speed 1 and five minutes at speed 3. After resting for 1.5 hours at room temperature (23°C), aliquots of each dough sample are prepared weighing approximately 86 grams and having a proofed frozen dough volume of about 130 cc. These dough pieces are put into a freezer at −18°C for about 18 hours. The frozen dough is removed from the freezer, placed in a cold oven that is immediately turned on and heated to a temperature of about 180°C. The dough is baked for about 40 minutes, allowed to cool and then measured to determine the baked loaf volume.

TABLE IV
Storage at −18°C

| Storage Time (days): | 1 | 7 | 14 | 28 |
|---|---|---|---|---|
| % Protein (Flour Basis) | | Baked Loaf Volume (cc) | | |
| *Dough #1 | 14 | 260 | 260 | 220 | 180 |
| Dough #2 | 28 | 330 | 300 | 260 | 220 |

*For comparison purposes, not an example of this invention.

The data in Table IV show a decreasing baked loaf volume for each proofed dough piece as frozen storage time increases; however when comparing Dough No. 1 with Dough No. 2, the dough with the higher protein content gives a consistently higher baked loaf volume suggesting that after prolonged frozen storage, a proofed yeast-containing dough could continue to deliver a commercially acceptable loaf volume with the judicious addition of vital wheat gluten.

**Claims**

1. A yeast-leavened and proofed frozen dough for commercial distribution having improved frozen storage stability which comprises more than 16% wheat protein based on the total flour content.

2. A frozen dough as claimed in claim 1 wherein the wheat protein is derived from a naturally occurring high protein variety wheat.

3. A frozen dough as claimed in claim 1 wherein the wheat protein comprises a commercially available flour having a 12—15% protein content and a supplemental amount of a wheat protein concentrate which is air-fractionated wheat flour or vital wheat gluten to increase the total protein content on a flour basis from 12—15% to more than 16%.

4. A frozen dough as claimed in any one of the preceding claims wherein the wheat protein is present in an amount of from 17 to 28% based on the total flour content.

5. A frozen dough as claimed in any one of the preceding claims which is proofed for a time sufficient for each portion of the dough to attain a specific volume of from 1.33 cubic centimeters per gram to 3.08 cubic centimeters per gram.

6. A method of preparing a yeast-leavened and proofed frozen dough as claimed in claim 1 comprising the steps of

a) preparing the yeast-containing dough under ambient temperature;

b) fermenting the resultant dough for at least 5 minutes at a fermentation temperature in the range of from 20° to 30°C;

c) dividing the fermented dough into separate portions;

d) forming each portion of fermented dough and proofing to allow additional fermentation;

e) freezing each portion of the dough from step d).

7. A method as claimed in claim 6 wherein the proofing time in step (d) is sufficient for each portion of dough to attain a specific volume of from 1.33 cubic centimeters per gram to 3.08 cubic centimeters per gram and the total fermentation time in step (b) and this step does not exceed 3 hours.

8. A method as claimed in claim 6 or claim 7 wherein the freezing conditions in step (e) are such that the core temperature reaches −1.0°C to −25.0°C in from 1 to 6 hours.

9. A method for the preparation of a baked dough product wherein the frozen dough from any one of claims 6 to 8 is placed in a thermostatically-controlled oven and baked at a temperature of about 180°C.

10. A method for the preparation of a baked dough product which comprises placing a frozen dough produced according to any one of claims 6 to 8 in a microwave oven.

**Patentansprüche**

1. Zum Vertrieb im Handel vorgesehener gefrorener Teig, der einer Hefegärung und Endgare unterworfen wurde und eine verbesserte Lagerfähigkeit in gefrorenem Zustand aufweist, dadurch gekennzeichnet, daß er, bezogen auf den Gesamtmehlgehalt, mehr als 16% Weizenprotein enthält.

2. Gefrorener Teig nach Anspruch 1, dadurch gekennzeichnet, daß das Weizenprotein von einer natürlich vorkommenden Weizensorte hohen Proteinanteils herrührt.

3. Gefrorener Teig nach Anspruch 1, dadurch gekennzeichnet, daß das Weizenprotein aus einem handelsüblichen Mehl mit einem 12—15%igen Proteingehalt und einer zur Erhöhung des Gesamtproteingehalts auf Mehlbasis von 12—15% auf mehr als 16% dienenden zusätzlichen Menge eines Weizenproteinkonzentrats, bei dem es sich um luftfraktioniertes Weizenmehl oder vitales Weizengluten handelt, besteht.

4. Gefrorener Teig nach einem der vorhergehenden Ansprüche, dadurch gekennzeichnet, daß das Weizenprotein, bezogen auf den Gesamtmehlgehalt, in einer Menge von 17—28% vorhanden ist.

5. Gefrorener Teig nach einem der vorhergehenden Ansprüche, dadurch gekennzeichnet, daß er so lange einer Endgare unterworfen wurde, daß jede Teigportion ein spezifisches Volumen von 1,33—3,08 cm³/g angenommen hat.

6. Verfahren zur Herstellung eines gefrorenen Teigs nach Anspruch 1, der einer Hefegärung und Endgare unterworfen wurde, gekennzeichnet durch folgende Stufen:

(a) Zubereitung des hefehaltigen Teigs unter Umgebungstemperatur;

(b) mindestens 5-minütiges Gärenlassen des erhaltenen Teigs bei einer Gärtemperatur im Bereich von 20—30°C;

(c) Aufteilung des einer Gärführung unterworfenen Teigs in getrennte Portionen;

(d) Ausformung jeder Portion des einer Gärführung unterworfenen Teigs und End- oder Stückgare zur weiteren Gärung und

(e) Gefrieren der einzelnen Teigportionen aus Stufe (d).

7. Verfahren nach Anspruch 6, dadurch gekennzeichnet, daß die End- oder Stückgare in Stufe (d) ausreicht, um jede Teigportion ein spezifisches Volumen von 1,33—3,08 cm³/g annehmen zu lassen, und daß die gesamte Gärzeit während der Angare in Stufe (b) und der End- oder Stückgare in dieser Stufe 3 h nicht übersteigt.

8. Verfahren nach Ansprüchen 6 oder 7, dadurch gekennzeichnet, daß die Gefrierbedingungen in Stufe (e) derart sind, daß die Kerntemperatur in 1—6 h −1°C bis −25°C erreicht.

9. Verfahren zur Herstellung einer Backware, dadurch gekennzeichnet, daß der nach dem Verfahren gemäß einem der Ansprüche 6 bis 8 zubereitete gefrorene Teig in einen thermostatgesteuerten Ofen eingeführt und bei einer Temperatur von etwa 180°C gebacken wird.

10. Verfahren zur Herstellung einer Backware, dadurch gekennzeichnet, daß man einen nach dem Verfahren gemäß einem der Ansprüche 6 bis 8 zubereiteten gefrorenen Teig in einem Mikrowellenherd einführt.

**Revendications**

1. Pâte congelée et levée à levain formé de levure pour distribution commerciale ayant une stabilité améliorée à la conservation à l'état congelé, qui comprend plus de 16% de protéine de froment rapportés à la teneur totale en farine.

2. Pâte congelée selon la revendication 1 dans laquelle la protéine de froment provient d'une variété de blé à haute teneur en protéine existant à l'état naturel.

3. Pâte congelée selon la revendication 1 dans laquelle la protéine de froment comprend une farine disponible dans le commerce à teneur en protéine de 12 à 15% et une quantité supplémentaire d'un concentré de protéine de froment qui est de la farine de froment fractionnée à l'air ou du gluten de froment vital pour porter la teneur totale en protéine rapportée à la farine de 12—15% à plus de 16%.

4. Pâte congelée selon l'une quelconque des revendications précédentes dans laquelle la protéine de froment est présente à une teneur de 17 à 28% rapportés à la teneur totale en farine.

5. Pâte congelée selon l'une quelconque des revendications précédentes ayant subi la levée pendant un temps suffisant pour que chaque partie de pâte atteigne un volume spécifique allant de 1,33 centimère cube par gramme à 3,08 centimètres cubes par gramme.

6. Procédé de préparation d'une pâte congelée à levain formé de levure et ayant subi la levée selon la revendication 1 comprenant les opérations de

a) préparation de la pâte contenant de la levure à température ambiante;

b) fermentation de la pâte résultante pendant au moins 5 minutes à une température de fermentation allant de 20° à 30°C;

c) division de la pâte fermentée en portions séparées;

d) mise en forme de chaque portion de pâte fermentée et levée pour permettre une fermentation additionnelle;

e) congélation de chaque portion de pâte provenant de l'opération d).

7. Procédé selon la revendication 6 dans lequel le temps de levée lors de l'opération d) est suffisant pour que chaque portion de pâte atteigne un volume spécifique allant de 1,33 centimètre cube par gramme à 3,08 centimètres cubes par gramme et le temps total de fermentation lors de l'opération b) et de la présente opération ne dépasse pas 3 heures.

8. Procédé selon la revendication 6 ou la revendication 7 dans lequel les conditions de congélation lors de l'opération e) sont telles que la température à coeur atteint −1,0°C à −25,0°C en 1 à 6 heures.

9. Procédé pour la préparation d'un produit de pâte cuit dans lequel on place la pâte congelée obtenue selon l'une quelconque des revendications 6 à 8 dans un four à commande thermostatique et on la cuit à une température d'environ 180°C.

10. Procédé pour la préparation d'un produit de pâte cuit, qui comprend la mise en place d'une pâte congelée obtenue selon l'une quelconque des revendications 6 à 8 dans un four à hyperfréquences.